# EUROPÄISCHE PATENTSCHRIFT

(11) **EP 0 490 913 B1**
(45) Veröffentlichungstag und Bekanntmachung des Hinweises auf die Patenterteilung: **03.11.1993**
(21) Anmeldenummer: 90912609.6
(22) Anmeldetag: 28.08.1990
(51) Int. Cl.: B23B 29/12, B23Q 3/12

(54) **VORRICHTUNG ZUM LÖSBAREN VERBINDEN EINES WERKZEUGS MIT EINER MASCHINENSPINDEL**
DEVICE FOR REMOVABLY SECURING A TOOL TO A MACHINE SPINDLE
DISPOSITIF POUR LE MONTAGE AMOVIBLE D'UN OUTIL SUR LA BROCHE D'UNE MACHINE

(30) Priorität: 09.09.1989 DE 3930074
(43) Veröffentlichungstag der Anmeldung: 24.06.1992
(73) Patentinhaber: KOMET Präzisionswerkzeuge Robert Breuning GmbH, D-74354 Besigheim (DE)
(72) Erfinder: STOLZ, Gerhard, D-7121 Löchgau (DE); SCHEER, Gerhard, D-7121 Ingersheim (DE)
(74) Vertreter: Wolf, Eckhard, Dr.-Ing.
(86) Internationale Anmeldenummer: EP9001431
(87) Internationale Veröffentlichungsnummer: WO9103346

(56) Entgegenhaltungen:
- DE-A- 3 007 440
- DE-A- 3 243 948
- DE-A- 3 326 665
- US-A- 4 684 301
- US-A- 4 863 323

## Beschreibung

Die Erfindung betrifft eine Vorrichtung zum lösbaren Verbinden eines Werkzeugs mit einer Spindel einer Werkzeugmaschine mit einer zur Spindelachse konzentrischen Paßbohrung, einem in die Paßbohrung eingreifenden Paßzapfen, mindestens einem im Paßzapfen in radialer Richtung verschiebbar gelagerten Klemmbolzen, einem mittels eines spindelseitig angeordneten Verstellmechanismus axial verschiebbaren Spannorgan und zwei am Spannorgan einerseits und am Klemmbolzen andererseits angeordneten, gegenüber der Spindelachse schräg angestellten, paarweise gegeneinander anliegenden Keilflächen zum radialen Verstellen des Klemmbolzens zwischen einer in den Paßzapfen zurückgezogenen Freigabestellung und einer radial nach außen verschobenen Spannstellung (US-A-4 684 301).

Verbindungsvorrichtungen dieser Art sind vor allem für Werkzeugmaschinen mit automatischem Werkzeugwechsel insbesondere für Bearbeitungszentren, mit zentralem Werkzeugeinzug bestimmt. Dieser primär für die Werkzeugaufnahme mit Steilkegel vorgesehene Werkzeugeinzug wirkt bei den meisten Bearbeitungszentren über ein Tellerfederpaket mit hydraulischer Entspannung, wobei ein am Steilkegel angeordneter Kopfbolzen über einen Zangengreifer unter Einspannung des Steilkegels in die Spindel eingezogen wird. Der im Falle der Steilkegelkupplung erforderliche Spannweg beträgt je nach Spindelgröße etwa 6 bis 10 mm. Um bei gegebener Spindelgröße eine gegenüber der Steilkegelverbindung erhöhte Steifigkeit zu erzielen, wurde bereits vorgeschlagen, die Steilkegelaufnahme durch eine zylindrische Aufnahme mit stirnseitiger Planflächenabstützung des Werkzeugs zu ersetzen (Zeitschrift "Werkstatt und Betrieb" 119 (1986), Seiten 797 bis 801) und zugleich den in vielen Werkzeugmaschinen bereits vorhandenen zentralen Werkzeugeinzug als Spannmechanismus zu verwenden.

Bei einem bekannten Werkzeug der eingangs angegebenen Art sind daher zwei im Paßzapfen radial verschiebbar gelagerte Klemmbolzen vorgesehen, die über ein als Ziehkeil ausgebildetes, über den spindelseitig angeordneten Spannmechanismus axial verschiebbares Spannorgen diametral nach außen bewegt werden können. In ihrer nach außen verschobenen Spannstellung greifen die Klemmbolzen mit einer kegelstumpfförmigen Spitze in eine konische Vertiefung im Bereich der Bohrungswand der Aufnahme ein, um eine am Paßzapfen angrenzende ringförmige Planfläche gegen eine an die Paßbohrung angrenzende Planfläche zu ziehen und mit dieser zu verspannen. In der Freigabestellung werden die Klemmbolzen so weit in den Paßzapfen zurückgezogen, daß der Paßzapfen beim Werkzeugwechsel aus der Paßbohrung herausgezogen werden kann. Die bei gegebener Einzugskraft des zentralen Spannmechanismus auf die Werkzeugkupplung übertragbare Spannkraft ist umso größer, je kleiner der Keilwinkel des durch die Keilflächen des Spannorgans und des Klemmbolzens gebildeten Keilgetriebes ist. Andererseits kann der Keilwinkel der bekannten Werkzeugkupplung nicht beliebig verkleinert werden, da damit gleichzeitig auch der radiale Hub der Klemmbolzen bei gegebenem axialem Verstellweg des Spannmechanismus kleiner wird. Dieser Nachteil wirkt sich vor allem bei größeren Werkzeugen aus, die neben einer erhöhten Spannkraft auch einen größeren Verstellhub der Klemmbolzen erfordern. Die bekannten Spannmechanismen mit Tellerfederpaketen können daher vor allem bei größeren Werkzeugen mit Planflächenverspannung nicht ohne weiteres eingesetzt werden. Statt dessen wurden zwar schon hydraulische Werkzeugspanner eingesetzt, die einen größeren Verstellweg ermöglichen. Die hierfür erforderliche aufwendige Umrüstung von Werkzeugmaschinen und Bearbeitungszentren beschränkt jedoch den Einsatzbereich der Werkzeuge mit Planflächenverspannung.

Der Erfindung liegt daher die Aufgabe zugrunde, eine Verbindungsvorrichtung der eingangs angegebenen Art zu schaffen, die auch bei großen Werkzeugen eine zuverlässige Planflächenverspannung mit hoher Spannkraft gewährleistet und trotzdem mit einem relativ kleinen axialen Spannweg des spindelseitigen zentralen Einzug- und Spannmechanismus auskommt.

Zur Lösung dieser Aufgabe wird die im Patentanspruch 1 angegebene Merkmalskombination vorgeschlagen. Weitere vorteilhafte Ausgestaltungen und Weiterbildungen des Erfindungsgedankens ergeben sich aus den abhängigen Ansprüchen.

Die Erfindung geht vor allem von dem Gedanken aus, daß der überwiegende Teil des Hubwegs zur nahezu kräftefreien Verschiebung des Klemmbolzens aus seiner in den Paßzapfen zurückgezogenen Freigabestellung in seine Spannstellung notwendig ist und daß der eigentliche Spannvorgang nur einen sehr kleinen Hubweg erfordert. Um andererseits eine momentenfreie Kraftübertragung zu gewährleisten, muß sichergestellt werden, daß die Keilflächen beim eigentlichen Spannvorgang mit großer Basisfläche gegeneinander anliegen. Um dies zu erreichen, wird gemäß der Erfindung vorgeschlagen, daß das Spannorgan und der Klemmbolzen im Bereich ihrer einander zugewandten Keilflächen eine durch Querflanken begrenzte Quernut aufweisen, durch die die Keilflächen in jeweils zwei im Abstand voneinander angeordnete, durch eine der Querflanken einerseits und eine äußere Querkante andererseits begrenzte Teilflächen geteilt sind, daß in der Freigabestellung jeweils eine der Teilflächen nach Art einer Verzahnung in die gegenüberliegende Quernut eingreift, daß beim Spannvorgang mindestens eine der paarweise gegeneinander anschlagenden Querflanken und/ oder Querkanten eine gegenüber der Keilschräge relativ zur Spindelachse steilere Auflaufschräge aufweist, und daß in der Spannstellung beide Teilflächen paarweise gegeneinander anliegen.

Eine optimale Anpassung an einen gegebenen Spannmechanismus kann auch bei großen Werkzeugen dadurch erreicht werden, daß die Keilschräge in einem Bereich von 8° bis 20° und die Auflaufschräge in einem Bereich von 40° bis 70° eingestellt wird.

Die Quernuten im Klemmbolzen und im Spannorgan weisen im fertigen Zustand einen im wesentlichen trapezförmigen Querschnitt mit nach außen divergierenden Flanken auf. Gemäß einer vorteilhaften Ausgestaltung der Erfindung weist die Auflaufschräge eine gegenüber der Spindelachse variable Steigung auf. Sie kann beispielsweise konvex gekrümmt sein und gegebenenfalls stetig und glatt in die Keilschräge übergehen.

Um das beim Spannvorgang über das Spannorgan auf den Klemmbolzen übertragene Kippmoment so klein wie möglich zu halten, ist die beim Spannvorgang zuerst gegen das Spannorgan anschlagende Querflanke des an seiner Außenfläche rotationssymmetrischen Klemmbolzens in Achsnähe des Klemmbolzens angeordnet. Die beim Spannvorgang gegen die Querflanke des Spannorgans anschlagende Querkante des Klemmbolzens ist zweckmäßig mindestens einfach, vorzugsweise zweifach angefast oder konvex gekrümmt.

Nach einer bevorzugten Ausgestaltung der erfindungsgemäßen Vorrichtung, bei welcher der Klemmbolzen zwei die Keilflächen seitlich begrenzende Führungswangen für das Spannorgan aufweist, ist die Quernut des Klemmbolzens zumindest an ihrem einen Ende durch eine der Führungswangen begrenzt.

Wenn die Quernut im Funkenerosionsverfahren hergestellt wird, stehen die stirnseitigen Begrenzungsflächen der Quernut stufenförmig über die Führungsflächen der Führungswangen über, während das Spannorgan an seinen seitlichen Führungsflächen im Bereich der in die Quernut eingreifenden Teile einen entsprechenden Materialabtrag aufweist.

Wenn andererseits die Quernut als Fräsnut ausgebildet ist, so kann diese durch ein vorgefertigtes Langloch in der einen Führungswange hindurch eingebracht werden, während auf der dem Langloch gegenüberliegenden Seite in Verlängerung der Quernut in die betreffende Führungswange von innen her ein Sackloch mit der Kontur der Querkante eingeformt werden kann. In diesem Falle ist ein Materialabtrag am Spannorgan nicht notwendig.

Um eine ausreichende Schmierung im Bereich der Keilflächen zu gewährleisten, weist der Klemmbolzen einen von seiner vorzugsweise zylindrischen Mantelfläche zur Keilfläche führenden Schmierkanal auf, wobei das keilflächenseitige Ende des Schmierkanals in die Quernut mündet.

Die Schmierung erfolgt vorzugsweise durch Querbohrungen, die durch die Führungswangen hindurch in die Quernut münden. Vorteilhafterweise ist in jeder Führungswange eine in die Quernut mündende Querbohrung angeordnet, wobei die Querbohrungen bevorzugt im Bereich je einer der Querkanten in die Quernut eingreifen und in der jeweils gegenüberliegenden Führungswange eine mit der Querbohrung fluchtende, zur Quernut hin offene Sackbohrung angeordnet sein kann. Dabei kann mindestens eine der Querflanken durch einen sich in den Bereich der Keilschräge erstreckenden Teil der Querbohrungsfläche gebildet werden. Letzteres ist dann der Fall, wenn die Querbohrungen zugleich als Hilfsbohrungen bei der Fertigung der Quernut im Fräsverfahren verwendet werden. Der Quernutengrund kann dann im wesentlichen senkrecht zur Querbohrungsachse ausgerichtet werden. In den Quernutengrund kann eine zur Klemmbolzenachse koaxiale, die Auflaufschräge gegebenenfalls anschneidende Zentrierbohrung als Fertigungshilfe eingebracht werden.

Beim Werkzeugwechsel wird der Klemmbolzen bei gelöstem Spannmechanismus duch Auflaufen seiner konischen Spitze selbsttätig in seine Freigabestellung innerhalb des Paßzapfens verschoben. Da beim Abziehen das Werkzeug vom Werkzeugwechsler allmählich beschleunigt wird, sind die hierbei auf den Klemmbolzen einwirkenden Kraftspitzen relativ klein, so daß eine Zwangsführung des Klemmbolzens über den Spannmechanismus nicht notwendig ist. Diese Überlegung gilt nicht ohne weiteres beim Bestückungsvorgang, da dort der Paßzapfen mit relativ hoher Geschwindigkeit in die Paßbohrung eingeschoben und dementsprechend ein überstehender Klemmbolzen mit hoher Spitzenkraft beaufschlagt wird. Gemäß einer bevorzugten Weiterbildung der Erfindung wird daher vorgeschlagen, daß der Klemmbolzen in seiner in den Paßzapfen zurückgezogenen Freigabestellung lösbar einrastbar ist. Bei einer Vorrichtung mit einer in den Paßzapfen eingedrehten und mit ihrer Spitze in eine an ihren Enden geschlossene Nut des Klemmbolzens eingreifenden Anschlagschraube kann dies dadurch bewerkstelligt werden, daß die Schraubenspitze eine entgegen der Kraft einer Feder verschiebbare Rastkugel trägt, die in der zurückgezogenen Freigabestellung des Klemmbolzens in eine im Bereich des Nutengrundes angeordnete Rastvertiefung eingerastet wird. Die auf diese Weise im Zuge des Werkzeugwechsels hergestellte Rastverbindung zwischen dem Klemmbolzen und dem Paßzapfen wird beim Spannvorgang über den Spannmechanismus ohne großen Kraftaufwand wieder gelöst.

Im folgenden wird die Erfindung anhand eines in der Zeichnung in schematischer Weise dargestellten Ausführungsbeispiels näher erläutert. Es zeigen
- Fig. 1a: einen Schnitt durch eine Verbindungsvorrichtung zwischen einer Maschinenspindel und einem Werkzeug in Spannstellung;
- Fig. 1b: einen Schnitt durch die Verbindungsvorrichtung in Freigabestellung;
- Fig. 1c: eine Detailvergrößerung der Fig. 1a;
- Fig. 2: einen Schnitt durch eine Rastvorrichtung für den Klemmbolzen;
- Fig. 3: einen Klemmbolzen mit gefräster Quernut in schaubildlicher Darstellung;
- Fig. 4: ein weiteres Ausführungsbeispiel eines Klemmbolzens mit gefräster Quernut in schaubildlicher Darstellung;
- Fig. 5: eine Draufsicht auf den Klemmbolzen nach Fig. 4 in teilweise geschnittener Darstellung;
- Fig. 6: einen Schnitt entlang der Schnittlinie 6-6 der Fig. 5;
- Fig. 7: ein weiteres Ausführungsbeispiel eines Klemmbolzens mit gefräster Quernut und erodierter Auflaufschräge in schaubildlicher Darstellung;
- Fig. 8: eine Draufsicht auf den Klemmbolzen nach Fig. 7;
- Fig. 9: einen Schnitt entlang der Schnittline 9-9 der Fig. 8.

Wie aus Fig. la und b zu ersehen ist, ist an eine drehbar gelagerte Spindel 10 einer im übrigen nicht dargestellten Werkzeugmaschine, beispielsweise eines Bearbeitungszentrums, ein Werkzeug 12, beispielsweise eine im übrigen nicht dargestellte Bohrstange, mittels einer Verbindungsvorrichtung 14 auswechselbar anschließbar. Die Spindel 10 weist zu diesem Zweck eine zur Spindelachse konzentrische Paßbohrung 16 auf, in die ein am Werkzeug angeordneter zylindrischer Paßzapfen 18 axial einführbar ist. Im gespannten Zustand der Verbindungsvorrichtung werden die die Paßbohrung 16 stirnseitig begrenzende ringförmige Planfläche 20 und die den Paßzapfen an seiner Wurzel ringförmig umgebende Planfläche 22 axial gegeneinander gepreßt. Diese Planflächenverspannung wird durch den nachstehend beschriebenen Kupplungsmechanismus bewirkt:

In einer radialen Bohrung 24 des Paßzapfens 18 sind zwei diametral einander gegenüberliegende Klemmbolzen 26 radial verschiebbar gelagert. Die Klemmbolzen 26 weisen eine im wesentlichen zylindrische Mantelfläche 27, eine radial nach außen weisende kegelstumpfförmige Spitze 28 sowie eine nach innen weisende Keilfläche 30 auf. Zwischen den einander zugewandten Keilflächen 30 der beiden Klemmbolzen 26 befindet sich ein als Doppelkeil ausgebildetes Spannorgan 32, das mit einer axial über das freie Ende des Paßzapfens 18 überstehenden, relativ zum Paßzapfen axial verschiebbaren Zugstange 34 starr verbunden ist. Die Zugstange 34 trägt ein Kupplungselement 36, das durch einen in der Zeichnung nicht dargestellten spindelseitigen Spannmechanismus zangenartig umfaßt werden kann. Im Werkzeugkörper 12 ist ein Hohlraum 38 zur Aufnahme des Spannorgans 32 in der Freigabestellung angeordnet. In die Spindel 10 sind im Bereich der Paßbohrung 16 in zwei diametral einander gegenüberliegende Innengewinde 40 Schrauben 42 eingedreht, die radial nach innen weisende konische Vertiefungen 44 zur Aufnahme der kegelstumpfförmigen Spitze 28 des jeweils benachbarten Klemmbolzens 26 aufweisen. Wird die Zugstange 34 über den nicht dargestellten Spannmechanismus in Richtung des Pfeils 46 axial verschoben, so wird diese Verschiebebewegung über das keilförmige Spannorgan 32 in einen radialen Hub der Klemmbolzen 26 umgesetzt. Dabei dringen die kegelstumpfförmigen Spitzen 28 in die konischen Vertiefungen 44 der Schrauben 42 ein, bis es zu einer Verspannung der gegeneinander anliegenden Kegel- und Konusflächen sowie - als Folge des Achsversatzes der genannten Flächen - zu einer Verspannung der Planflächen 20, 22 kommt.

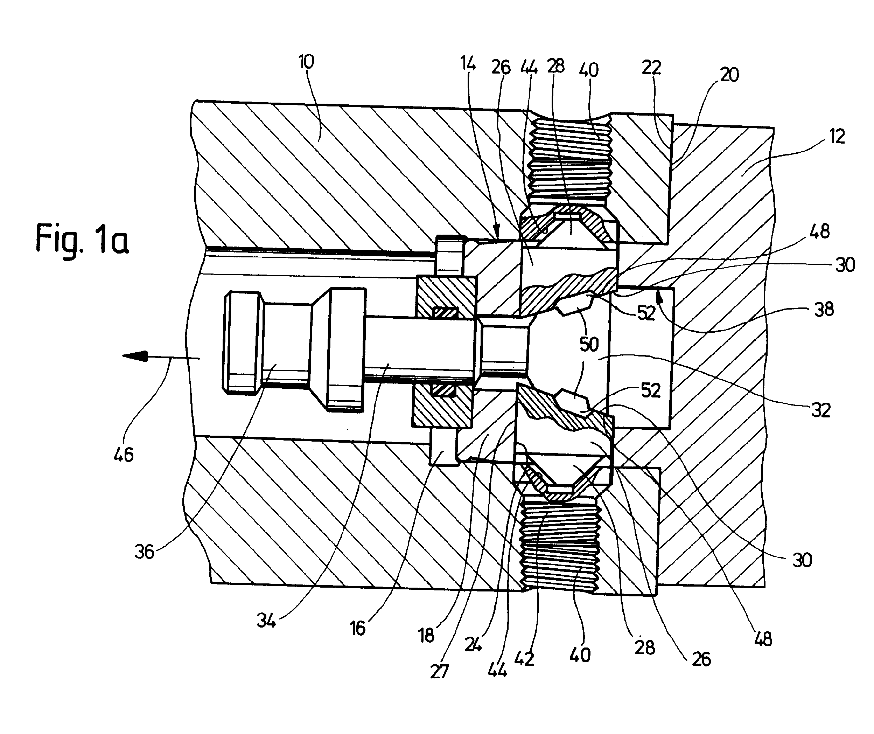

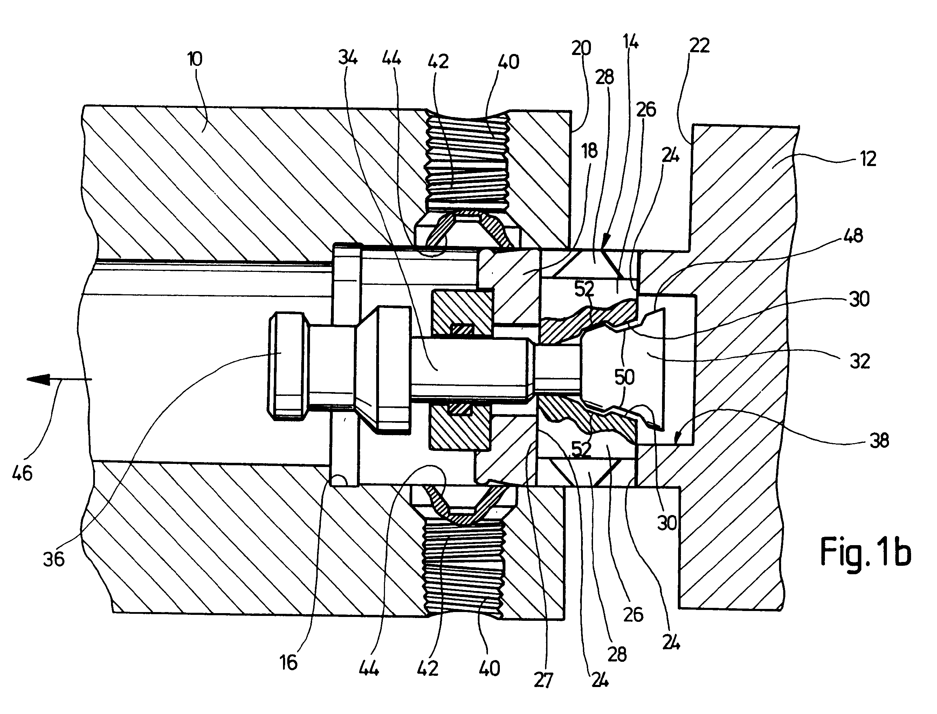

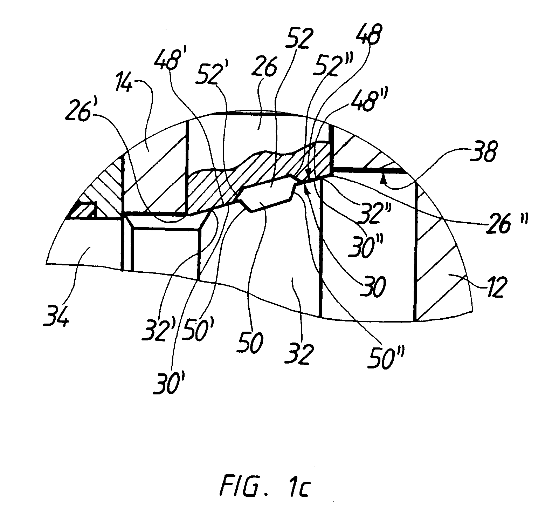

Das Spannorgan 32 und die Klemmbolzen 26 weisen im Bereich ihrer einander zugewandten Keilflächen 48 bzw. 30 je eine durch querverlaufende Flanken 50', 50'' bzw. 52', 52'' begrenzte Quernut 50, 52 auf, durch die die Keilflächen 30 bzw. 48 in jeweils zwei im Abstand voneinander angeordnete, durch eine der Querflanken einerseits und eine äußere Querkante 26', 26'' bzw. 32', 32'' andererseits begrenzte Teilflächen 30', 30'' bzw. 48', 48'' aufgeteilt werden. In der Freigabestellung (Fig. 1b) greift jeweils eine der Teilflächen 30' bzw. 48'' in die gegenüberliegende Quernut 52 bzw. 50 ein, während in der Spannstellung (Fig. 1a,c) beide Teilflächen 30', 48' bzw. 30'', 48'' paarweise gegeneinander anliegen. Die beim Spannvorgang paarweise gegeneinander anschlagenden Querflanken 52' der Quernut 52 und stangenseitigen Querkanten 32' des Spannorgans 32 bilden eine gegenüber der Keilschräge 30 bzw. 48 relativ zur Spindelachse steilere Auflaufschräge, so daß im Übergangsbereich der axiale Verschiebeweg der Zugstange 34 in einen relativ großen Hub der Klemmbolzen 26 umgesetzt wird. Dies ist deshalb möglich, weil in diesem Bereich die Hubumsetzung nahezu kräftefrei erfolgt. Der eigentliche Spannvorgang setzt erst ein, wenn die Keilflächen 30' bzw. 48' einerseits und 30'' bzw. 48'' andererseits mit ihrem kleinen Keilwinkel gegeneinander verschoben werden und dabei eine entsprechend große Kraftübersetzung gewährleisten. Durch die Quernuten 50 und 52 wird die Basisfläche des Keilgetriebes im Spannzustand nicht geändert. Die durch die Quernuten entstehende Lücke in der Keilfläche ist beim Spannvorgang sogar von Vorteil, wenn man die Bearbeitungsungenauigkeiten bei der Planflächenherstellung berücksichtigt.

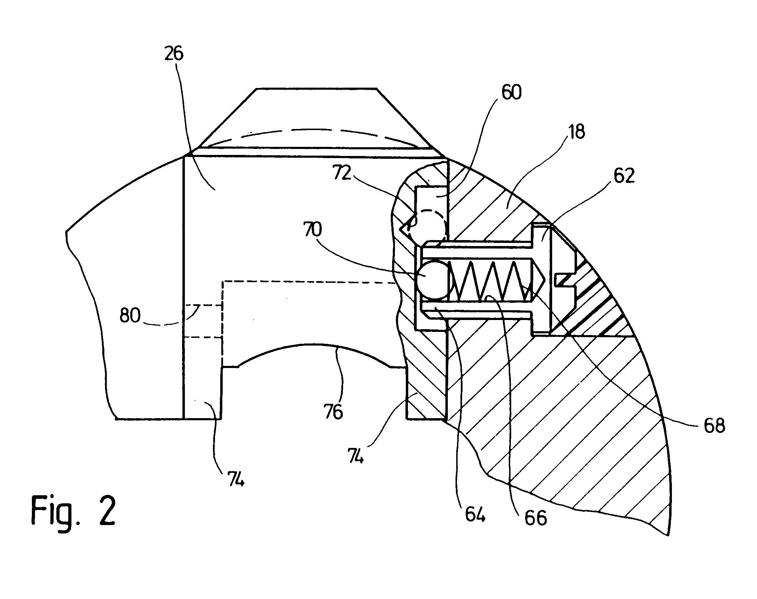

Um ein versehentliches Herausfallen der Klemmbolzen 26 aus dem Paßzapfen 18 zu vermeiden, wird der Hub der Klemmbolzen 26 in beiden Richtungen durch eine an ihren Enden geschlossene Längsnut 60 begrenzt, in die eine in den Paßzapfen 18 eingedrehte Anschlagschraube 62 mit ihrer Spitze 64 eingreift (Fig. 2). Die Anschlagschraube 62 weist in ihrem Schaft eine zur Spitze hin offene zylindrische Bohrung 66 auf, in der eine Druckfeder 68 und eine Rastkugel 70 angeordnet sind. Die Rastkugel 70 rastet in der in seiner Freigabestellung in das Innere des Paßzapfens 18 zurückgezogenen Stellung des Klemmbolzens 26 in eine im Nutengrund angeordnete Rastvertiefung 72 ein, so daß der Klemmbolzen bei der Handhabung des Werkzeugs 12 außerhalb der Maschinenspindel 10 nicht in seine nach außen verschobene Stellung gelangen kann. Die Rastverbindung wird erst gelöst, wenn bei auf die Spindel 10 aufgestecktem Werkzeug der Spannvorgang ausgelöst wird.

Die Keilfläche 30 eines jeden Klemmbolzens ist seitlich durch Führungswangen 74 begrenzt, zwischen denen das Spannorgan 32 seitlich geführt ist. Eine Zylinderkalotte 76 sorgt dafür, daß die Zugstange 34 in der Freigabestellung zwischen den in den Paßzapfen zurückgezogenen Klemmbolzen hindurchgreifen kann.

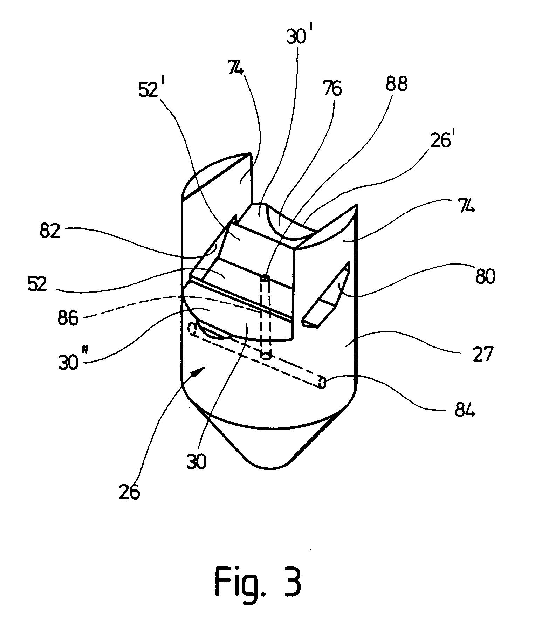

Bei dem in Fig. 3 gezeigten Klemmbolzen ist die Quernut 52 im Fräsverfahren hergestellt. Zu diesem Zweck wird eine der Seitenwangen 74 zunächst mit einem Langloch 80 versehen, durch das hindurch das Fräswerkzeug in den Bereich der Keilfläche 30 von der Seite her eingeführt werden kann. Beim Fräsvorgang erhält das Langloch 80 die trapezförmige Kontur der Quernut 52. Im Zuge des Fräsvorgangs wird außerdem auf der dem Langloch 80 gegenüberliegenden Seite eine sacklochartige Vertiefung 82 mit der Kontur der Quernut 52 eingefräst, die gewährleistet, daß an den seitlichen Führungswangen des Spannorgans 32 kein Materialabtrag notwendig ist.

Weiter sind im Klemmbolzen 26 von der Mantelfläche 27 zur Keilfläche führende Schmiermittelbohrungen 84, 86 vorgesehen, deren keilflächenseitiges Ende 88 innerhalb der Quernut 52 endet.

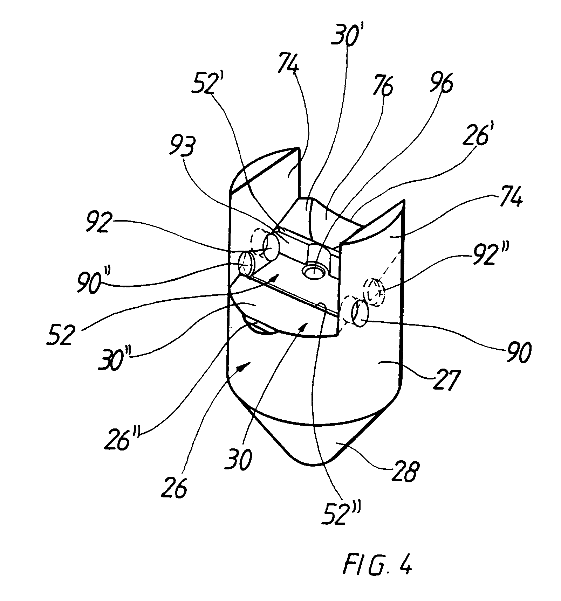

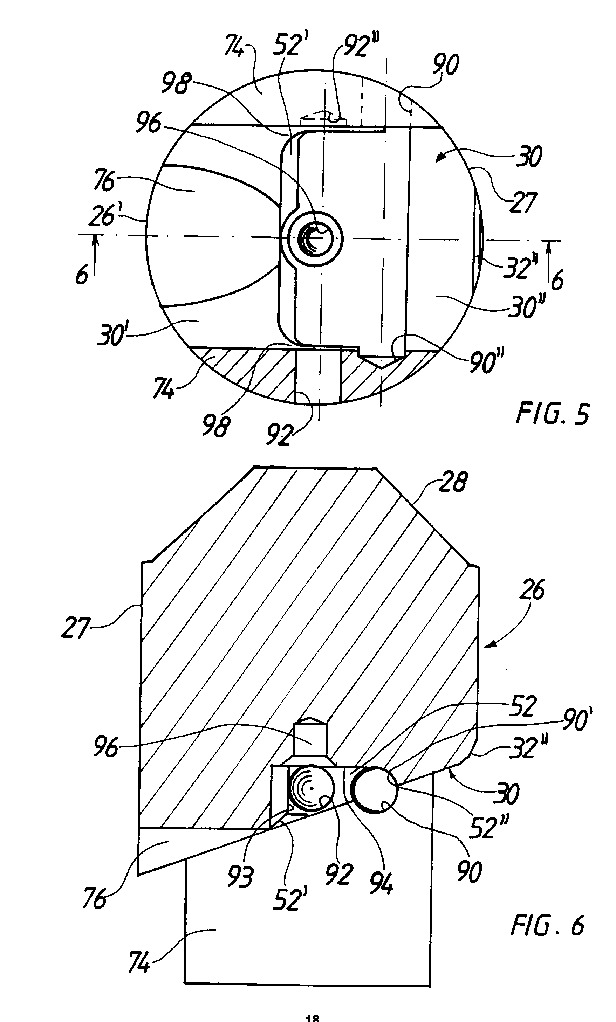

In den Fig. 4 bis 6 ist ein weiteres gegenüber Fig. 3 abgewandeltes Ausführungsbeispiel eines Klemmbolzens 26 gezeigt, dessen Quernut im Fräsverfahren hergestellt ist. Zu diesem Zweck werden in den stangenförmigen Rohling zunächst zwei im Abstand voneinander angeordnete, nicht ganz durchgehende Querbohrungen 90, 92 von einander entgegengesetzten Seiten eingebracht. Wenn im Anschluß daran die Keilschräge 30 zwischen den beiden Seitenwangen 74 in den Rohling eingefräst wird, bricht die Bohrung 90 zur Schrägfläche hin auf. Sodann kann von der aufgebrochenen Bohrung 90 aus die Quernut 52 mit einem stirnseitig in den Zwischenraum zwischen den Führungswangen 74 eingeführten Fräser unter Aufbrechen der Querbohrung 92 ausgeräumt werden, wobei der stehenbleibende Wandteil 90' die Querflanke 52'' der Quernut 52 bildet. Die Querflanke 52' erhält beim Fräsvorgang einen vertikalen Abschnitt 93, der unter Bildung der Auflaufschräge zur Keilfläche 30 hin angefast ist. In den zur Bolzenachse senkrechten Grund 94 der Quernut 52 ist eine koaxiale Zentrierbohrung 96 als Fertigungshilfe eingeformt, die mit ihrem Randbereich die Querflanke 52' anschneidet. Die beim Fräsvorgang im Bereich der Auflaufschräge 52' verbleibenden Randstufen 98 müssen durch einen entsprechenden Materialabtrag am Keilkörper 32 berücksichtigt werden, damit sich die beiden Teile im Bereich ihrer Quernuten verzahnen können. Die in den Seitenwangen 74 verbleibenden durchgehenden Bohrungsabschnitte 90, 92 bilden im fertigen Klemmbolzen eine von der Mantelfläche 27 zur Keilfläche 30 führende Schmiermittelbohrung. Die des weiteren verbleibenden Sackbohrungen 90'', 92'' haben nur eine geringe Tiefe von etwa 0,1 mm und sollen gewährleisten, daß an dieser Stelle beim Bearbeitungsvorgang kein Materialüberstand nach dem Inneren der Führungswangen 74 verbleibt.

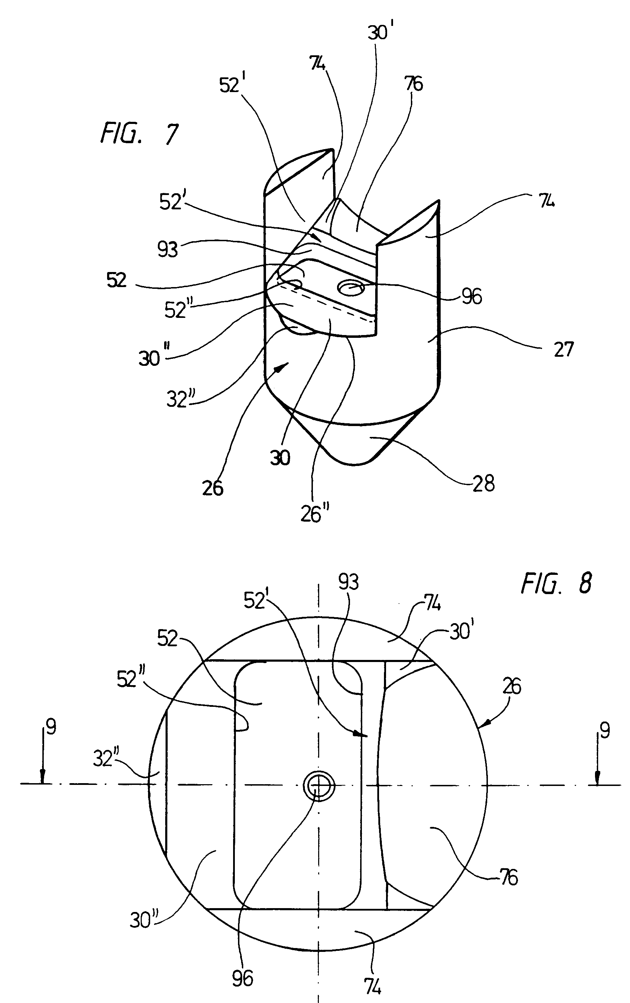

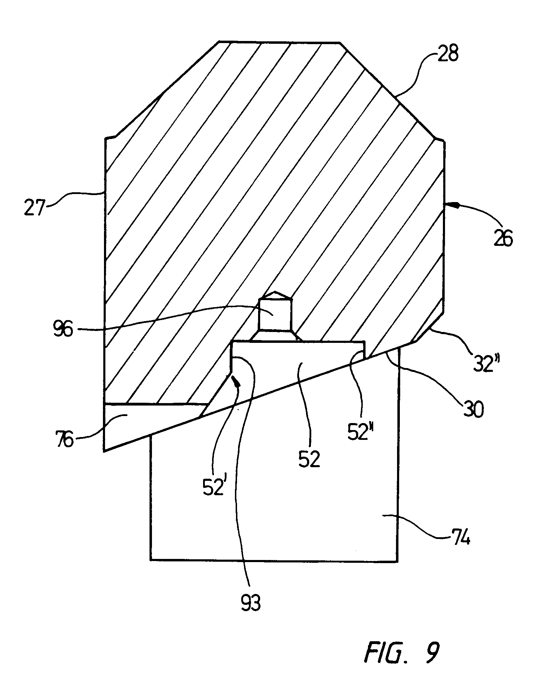

Bei dem in Fig. 7 bis 9 gezeigten Ausführungsbeispiel eines Klemmbolzens 26 ist der tiefe Teil der Quernut 52 zwischen den Seitenwangen 74 im Fräsverfahren hergestellt, nachdem zuvor die Keilschräge 30 eingefäst worden ist. Die Querflanke 52' erhält beim Fräsvorgang einen vertikalen Abschnitt 93, der unter Bildung der Auflaufschräge zur Keilfläche 30 anschließend im Erodierverfahren angefast wird. Die Auflaufschräge reicht in allen Bereichen bis zu den Seitenwangen 74, so daß die beim Ausführungsbeispiel nach Fig. 4 bis 6 auftretenden Eckenradien mit den Randstufen 98 entfallen. Weiter kommt man bei dieser Herstellungsweise ohne die Querbohrungen 90, 92 bzw. Durchbrüche 80 in den Seitenwangen aus.

## Patentansprüche

1. Vorrichtung zum lösbaren Verbinden eines Werkzeuges mit einer Spindel (10) einer Werkzeugmaschine mit einer zur Spindelachse konzentrischen Paßbohrung (16), einem in die Paßbohrung eingreifenden Paßzapfen (18), mindestens einem im Paßzapfen in radialer Richtung verschiebbar gelagerten Klemmbolzen (26), einem mittels eines spindelseitig angeordneten Spannmechanismus axial verschiebbaren Spannorgan (32) und zwei am Spannorgan einerseits und am Klemmbolzen andererseits angeordneten, gegenüber der Spindelachse schräg angestellten, paarweise gegeneinander anliegenden Keilflächen (48, 30) zum radialen Verstellen des Klemmbolzens zwischen einer in den Paßzapfen zurückgezogenen Freigabestellung und einer radial nach außen verschobenen Spannstellung, **dadurch gekennezeichnet,** daß das Spannorgan (32) und der Klemmbolzen (26) im Bereich ihrer einander zugewandten Keilflächen (48, 30) eine durch Querflanken (50', 50''; 52', 52'') begrenzte Quernut (50, 52) aufweisen, durch die die Keilflächen (48, 30) in jeweils zwei im Abstand voneinander angeordnete, durch eine der Querflanken einerseits und eine äußere Querkante andererseits begrenzte Teilflächen (48', 48'' ;30', 30'') geteilt sind, daß in der Freigabestellung jeweils eine der Teilflächen (48'', 30') in die gegenüberliegende Quernut (50, 52) eingreift, daß mindestens eine der beim Spannvorgang paarweise gegeneinander anschlagenden Querflanken (52') und/oder Querkanten (32') eine gegenüber der Keilschräge (30, 48) relativ zur Spindelachse steilere Auflaufschräge aufweist, und daß in der Spannstellung beide Teilflächen (30', 48'; 30'', 48'') paarweise gegeneinander anliegen.

2. Vorrichtung nach Anspruch 1, **dadurch gekennzeich****net,** daß die Auflaufschräge eine gegenüber der Spindelachse variable Steigung aufweist.

3. Vorrichtung nach Anspruch 1 oder 2, **dadurch gekenn****zeichnet,** daß zumindest eine der Auflaufschrägen konvex gekrümmt ist.

4. Vorrichtung nach Anspruch 3, **dadurch gekennzeich****net,** daß zumindest eine der Auflaufschrägen glatt in die Keilschräge übergeht.

5. Vorrichtung nach einem der Ansprüche 1 bis 4, **da****durch gekennzeichnet,** daß die beim Spannvorgang zuerst gegen das Spannorgan anschlagende Querflanke (52') des im wesentlichen rotationssymmetrischen Klemmbolzens (26) in der Achsennähe des Klemmbolzens angeordnet ist.

6. Vorrichtung nach einem der Ansprüche 1 bis 5, **da****durch gekennzeichnet,** daß die beim Spannvorgang gegen die Querflanke (50'') des Spannorgans (32) anschlagende Querkante (26'') des Klemmbolzens (26) mindestens einfach, vorzugsweise doppelt angefast oder konvex gekrümmt ist.

7. Vorrichtung nach einem der Ansprüche 1 bis 6, bei welchem der Klemmbolzen zwei die Keilflanken seitlich begrenzende Führungswangen für das Spannorgan aufweist, **dadurch gekennzeichnet,** daß die Quernut (52) des Klemmbolzens (26) zumindest an ihrem einen Ende durch eine der Führungswangen (74) begrenzt ist.

8. Vorrichtung nach einem der Ansprüche 1 bis 7, **da****durch gekennzeichnet,** daß die Quernut (52) des Klemmbolzens (26) im Funkenerosionsverfahren hergestellt oder gefräst ist.

9. Vorrichtung nach Anspruch 8, **dadurch gekennzeich****net,** daß die stirnseitigen Begrenzungsflächen der Quernut (52) stufenförmig über die Führungsflächen der Führungswangen (74) überstehen, und daß das Spannorgan an seinen seitlichen Führungsflächen im Bereich der in die Quernut (52) eingreifenden Teile einen entsprechenden Materialabtrag aufweist.

10. Vorrichtung nach einem der Ansprüche 1 bis 7, **da****durch gekennzeichnet,** daß die Quernut (52) des Klemmbolzens (26) gefräst und die gegen das Spannorgan (32) anschlagende Querflanke (52') im Bereich der Auflagefläche erodiert ist.

11. Vorrichtung nach Anspruch 8 oder 9, **gekennzeichnet** **durch** ein in Verlängerung der Quernut (52) in einer der Führungswangen (74) angeordnetes durchgehendes Langloch (80).

12. Vorrichtung nach Anspruch 11, **gekennzeichnet durch** ein in Verlängerung der Quernut (52) in einer der Führungswangen (74) angeordnetes Sackloch (82).

13. Vorrichtung nach einem der Ansprüche 1 bis 12, **da****durch gekennzeichnet,** daß die Quernuten (50, 52) einen im wesentlichen trapezförmigen Querschnitt mit mindestens einer nach außen divergierenden Flanke aufweisen.

14. Vorrichtung nach einem der Ansprüche 1 bis 13, **da****durch gekennzeichnet,** daß der Klemmbolzen (26) einen von seiner zylindrischen Mantelfläche (27) zur Keilfläche (30) führenden Schmierkanal (84,86) aufweist, wobei das keilflächenseitige Ende (88) des Schmierkanals (84, 86) in die Quernut (52) mündet.

15. Vorrichtung nach einem der Ansprüche 1 bis 14, **da****durch gekennzeichnet,** daß der Klemmbolzen (26) in seiner in den Paßzapfen (18) zurückgezogenen Freigabestellung lösbar einrastbar ist.

16. Vorrichtung nach Anspruch 15, mit einer in den Paßzapfen eingedrehten, mit ihrer Spitze in eine an ihren Enden geschlossenen Begrenzungsnut eingreifenden Anschlagschraube, **dadurch gekennzeichnet,** daß die Schraubenspitze (64) eine entgegen der Kraft einer Feder (68) verschiebbare Rastkugel (70) trägt, die in der zurückgezogenen Freigabestellung des Klemmbolzens (26) in eine im Bereich des Nutengrunds (60) angeordnete Rastvertiefung (72) einrastbar ist.

17. Vorrichtung nach einem der Ansprüche 1 bis 16, **da****durch gekennzeichnet,** daß die Keilschräge einen Winkel von 8° bis 20° mit der Spindelachse einschließt.

18. Vorrichtung nach einem der Ansprüch 1 bis 17, **da****durch gekennzeichnet,** daß die Auflaufschräge einen Winkel von 40° bis 70° mit der Spindelachse einschließt.

19. Vorrichtung nach einem der Ansprüche 1 bis 18, **ge****kennzeichnet durch** mindestens eine durch eine der Führungswangen (74) in die Quernut (52) mündende Querbohrung (90, 92).

20. Vorrichtung nach Anspruch 19, **dadurch gekennzeich****net,** daß in jeder Führungswange (74) eine in die Quernut (52) mündende Querbohrung (90, 92) angeordnet ist.

21. Vorrichtung nach Anspruch 20, **dadurch gekennzeich****net,** daß die Querbohrungen (90, 92) im Bereich je einer der Querkanten (52'', 52') in die Quernut (52) münden.

22. Vorrichtung nach einem der Ansprüche 19 bis 21, **ge****kennzeichnet durch** eine mit der Querbohrung (90, 92) fluchtende, zur Quernut (52) offene Sackbohrung (90'', 92'') in der gegenüberliegenden Führungswange (74).

23. Vorrichtung nach einem der Ansprüche 19 bis 22, **da****durch gekennzeichnet,** daß mindestens eine der Querflanken (52'') durch einen sich in den Bereich der Keilschräge (30) erstreckenden Teil (90') der Querbohrungsfläche (90) begrenzt ist.

24. Vorrichtung nach einem der Ansprüche 1 bis 23, **da****durch gekennzeichnet,** daß die Auflaufschräge (52') als Fase in einer zur Klemmbolzenachse im wesentlichen parallelen Querflanke (93) ausgebildet ist.

25. Vorrichtung nach einem der Ansprüche 1 bis 24, **da-** **durch gekennzeichnet,** daß der Quernutengrund (94) im wesentlichen senkrecht zur Klemmbolzenachse ausgerichtet ist.

26. Vorrichtung nach einem der Ansprüche 1 bis 25, **ge****kennzeichnet durch** eine zur Klemmbolzenachse koaxiale Zentrierbohrung (96) im Quernutengrund (94).

27. Vorrichtung nach einem der Ansprüche 1 bis 26, **da****durch gekennzeichnet,** daß die Auflaufschräge (52') durch die Zentrierbohrung (96) angeschnitten ist.

## Claims

1. A device for releasably connecting a tool to a spindle (10) of a machine tool comprising a fitting aperture (16) concentric with respect to the spindle axis, a fitting pin (18) extending into the fitting aperture, at least one clamping bolt (26) movably supported in radial direction in the fitting pin, a clamping member (32) axially movable by means of a clamping mechanism arranged in the spindle, and two tapered surfaces (48, 30), one being provided on the clamping member and the other being provided on the clamping bolt, are positioned inclined with respect to the spindle axis, and rest in pairs against one another, for facilitating a radial adjustment of the clamping bolt between a release position pulled back into the fitting pin and a radially outwardly extended clamping position, characterized in that the clamping member (32) and the clamping bolt (26) each have a transverse groove (50, 52) which face one another defined by transverse flanks (50', 50''; 52', 52'') in the area of their respective tapered surfaces (48, 30), through which transverse groove the tapered surfaces (48, 30) are divided into two partial surfaces (48', 48''; 30', 30'') arranged spaced from one another and limited on one side by one of the transverse flanks and on another side by an outer transverse edge, that in the release position, each of the partial surfaces (48'', 30') extends into the oppositely lying transverse groove (50, 52), that, during the clamping operation, at least one of the transverse flanks (52') and/or transverse edges (32') strike one another in pairs has a receiving slope which is steeper relative to the spindle axis compared with the tapered surface (30, 48), and that in the clamping position both partial surfaces (30', 48'; 30'', 48'') rest in pairs against one another.

2. The device according to Claim 1, characterized in that the receiving slope has a pitch variable with respect to the spindle axis.

3. The device according to Claim 1 or 2, characterized in that at least one of the receiving slopes is curved convexly.

4. The device according to Claim 3, characterized in that at least one of the receiving slopes transfers smoothly into the tapered surface.

5. The device according to one of the Claims 1 to 4, characterized in that the transverse flank (52') of the essentially rotationally symmetrical clamping bolt (26), which transverse flank during the clamping operation first strikes the clamping member, is arranged near the axis of the clamping bolt.

6. The device according to one of the Claims 1 to 5, characterized in that the transverse edge (26'') of the clamping bolt (26), which transverse edge strikes the transverse flank (50'') of the clamping member (32) during the clamping operation, is at least once, preferably twice chamfered or convexly curved.

7. The device according to one of the Claims 1 to 6, in which the clamping bolt has two guide cheeks for the clamping member, which guide cheeks laterally limit the tapered flanks, characterized in that the transverse groove (52) of the clamping bolt (26) is limited at least at its one end by one of the guide cheeks (74).

8. The device according to one of the Claims 1 to 7, characterized in that the transverse groove (52) of the clamping bolt (26) is manufactured or milled by the spark-erosion method.

9. The device according to Claim 8, characterized in that front-face boundary surfaces of the transverse groove (52) project step-like over the guide surfaces of the guide cheeks (74), and that the clamping member has at its lateral guide surfaces in the area of the parts engaging the transverse groove (52) a corresponding material removal.

10. The device according to one of the Claims 1 to 7, characterized in that the transverse groove (52) of the clamping bolt (26) is milled and the transverse flank (52') striking the clamping member (32) is eroded in the area of the receiving slope

11. The device according to Claim 8 or 9, characterized by a through slotted hole (80) arranged in extension of the transverse groove (52) in one of the guide cheeks (74).

12. The device according to Claim 11, characterized by a blind hole (82) arranged in extension of the transverse groove (52) in one of the guide cheeks (74).

13. The device according to one of the Claims 1 to 12, characterized in that the transverse grooves (50, 52) have an essentially trapezoidal cross section with at least one outwardly diverging flank.

14. The device according to one of the Claims 1 to 13, characterized in that the clamping bolt (26) has a lubricating channel (84, 86) leading from its cylindrical outer surface (27) to the tapered surface (30), with one end (88) of the lubricating channel (84, 85) terminating at the transverse groove (52).

15. The device according to one of the Claims 1 to 14, characterized in that the clamping bolt (26) is releasably lockable in its release pulled back position into the fitting pin (18).

16. The device according to Claim 15 comprising a stop screw screwed into the fitting pin, a tip of the screw being received in a boundary groove closed at its end, characterized in that the screw tip (64) carries a locking ball (70) movable against the force of a spring (68), which locking ball, in the pulled back release position of the clamping bolt (26), extends into a locking recess (72) arranged in the area of the floor (60) of the groove.

17. The device according to one of the Claims 1 to 16, characterized in that the tapered surface defines an angle of 8° to 20° with the spindle axis.

18. The device according to one of the Claims 1 to 17, characterized in that the receiving slope defines an angle of 40° to 70° with the spindle axis.

19. The device according to one of the Claims 1 to 18, characterized by at least one transverse bore (90, 92) ending through one of the guide cheeks (74) in the transverse groove (52).

20. The device according to Claim 19, characterized in that in each guide cheek (74) there is arranged a transverse bore (90, 92) ending in the transverse groove (52).

21. The device according to Claim 20, characterized in that the transverse bores (90, 92) end in the area of each one of the transverse edges (52'', 52') in the transverse groove (52).

22. The device according to one of the Claims 19 to 21, characterized by a blind hole (90'', 92'') aligned with the transverse bore (90, 92) and open toward the transverse groove (52) in the oppositely lying guide cheek (74).

23. The device according to one of the Claims 19 to 22, characterized in that at least one of the transverse flanks (52'') is defined by a part (90') of the transverse bore surface (90), which part extends into the area of the tapered surface (30).

24. The device according to one of the Claims 1 to 23, characterized in that the receiving slope (52') is constructed as a chamfer in a transverse flank (93) essentially parallel with respect to the clamping bolt axis.

25. The device according to one of the Claims 1 to 24, characterized in that the transverse groove floor (94) is aligned essentially perpendicular with respect to the clamping bolt axis.

26. The device according to one of the Claims 1 to 25, characterized by a centering bore (96) in the transverse groove floor (94), which centering bore is coaxial with respect to the clamping bolt axis.

27. The device according to one of the Claims 1 to 26, characterized in that the receiving slope (52') is intersected by the centering bore (96).

## Revendications

1. Dispositif de fixation d'un outil à une broche (10) d'une machine-outil, comportant un alésage (16) de même axe que la broche, un tenon (18) s'engageant dans cet alésage, au moins une cheville de blocage (26) montée mobile radialement dans ce tenon, un organe de serrage (32) mobile axialement au moyen d'un mécanisme de serrage placé du côté de la broche, et deux surfaces inclinées (48, 30) situées l'une sur l'organe de serrage et l'autre sur la cheville de blocage, inclinées par rapport à l'axe de la broche et s'appuyant l'une contre l'autre destinées au déplacement radial de la cheville de blocage entre une position de libération reculée dans le tenon et une position de serrage déplacée radialement vers l'extérieur, caractérisé par le fait que l'organe de serrage (32) et la cheville de blocage (26) présentent dans la zone de leurs surfaces inclinées en regard (48, 30) une rainure transversale (50, 52) limitée par des flancs transversaux (50', 50'' ; 52', 52'') qui divise leur surface inclinée (48, 30) en deux surfaces partielles espacées (48', 48'' ; 30', 30'') limitées par d'une part un des flancs latéraux et d'autre part un bord transversal extérieur, que dans la position de libération, une des surfaces partielles (48'', 30') de chaque surface inclinée est engagée dans la rainure transversale opposée (50, 52), qu'au moins un des flancs transversaux (52') et/ou des bords transversaux (32') butant deux à deux l'un contre l'autre lors du serrage présente un biais de montée plus raide par rapport à l'axe de la broche que le biais de coin (30, 48), et que dans la position de serrage, les deux surfaces partielles (30', 48' ; 30'', 48'') s'appuient deux à deux l'une contre l'autre.

2. Dispositif selon la revendication 1, caractérisé par le fait que le biais de montée a une pente variable par rapport à l'axe de la broche.

3. Dispositif selon l'une des revendications 1 et 2, caractérisé par le fait qu'au moins un des biais de montée est convexe.

4. Dispositif selon la revendication 3, caractérisé par le fait qu'au moins un des biais de montée se raccorde de manière unie au biais de coin.

5. Dispositif selon l'une des revendications 1 à 4, caractérisé par le fait que le flanc transversal (52') de la cheville de blocage, sensiblement à symétrie de révolution (26) qui bute le premier contre l'organe de serrage lors du serrage est situé à proximité de l'axe de la cheville de blocage.

6. Dispositif selon l'une des revendications 1 à 5, caractérisé par le fait que le bord transversal (26'') de la cheville de blocage (26) qui bute contre le flanc transversal (50'') de l'organe de serrage (32) lors du serrage est chanfreiné au moins une fois, de préférence deux fois, ou est convexe.

7. Dispositif selon l'une des revendications 1 à 6, dans lequel la cheville de blocage présente deux joues de guidage de l'organe de serrage limitant latéralement les flancs inclinés, caractérisé par le fait que la rainure transversale (52) de la cheville de blocage (26) est limitée à au moins une extrémité par une des joues de guidage (74).

8. Dispositif selon l'une des revendications 1 à 7, caractérisé par le fait que la rainure transversale (52) de la cheville de blocage (26) est réalisée par électro-érosion ou par fraisage.

9. Dispositif selon la revendication 8, caractérisé par le fait que les surfaces frontales de limitation de la rainure transversale (52) saillent en forme de gradin des surfaces de guidage des joues de guidage (74), et que l'organe de serrage présente sur ses surfaces latérales de guidage, dans la zone des parties s'engageant dans la rainure transversale (52), un enlèvement de matière correspondant.

10. Dispositif selon l'une des revendications 1 à 7, caractérisé par le fait que la rainure transversale (52) de la cheville de blocage (26) est réalisée par fraisage et le flanc transversal (52') butant contre l'organe de serrage (32) est, dans la zone de la surface d'appui, réalisé par électro-érosion.

11. Dispositif selon l'une des revendications 8 et 9, caractérisé par un trou allongé traversant (80) fait dans une des joues de guidage (74) dans le prolongement de la rainure transversale (52).

12. Dispositif selon la revendication 11, caractérisé par un trou borgne (82) fait dans une des joues de guidage (74) dans le prolongement de la rainure transversale (52).

13. Dispositif selon l'une des revendications 1 à 12, caractérisé par le fait que les rainures transversales (50, 52) ont une section sensiblement trapézoïdale avec au moins un flanc divergeant vers l'extérieur.

14. Dispositif selon l'une des revendications 1 à 13, caractérisé par le fait que la cheville de blocage (26) présente un canal de lubrification (84, 86) allant de sa surface latérale cylindrique (27) à la surface inclinée (30), et l'extrêmité côté surface inclinée (88) de ce canal (84, 86) débouche dans la rainure transversale (52).

15. Dispositif selon l'une des revendications 1 à 14, caractérisé par le fait que la cheville de blocage (26) peut être encliquetée dans sa position de libération reculée dans le tenon (18).

16. Dispositif selon la revendication 15, comportant une vis de butée vissée dans le tenon et s'engageant à son extrémité dans une rainure de limitation fermée à ses extrémités, caractérisé par le fait que l'extrémité (64) de la vis porte une bille d'encliquetage (70) mobile contre l'action d'un ressort (68) et qui, dans la position de libération reculée de la cheville de blocage (26), peut s'encliqueter dans un creux d'encliquetage (72) situé dans la zone du fond (60) de la rainure.

17. Dispositif selon l'une des revendications 1 à 16, caractérisé par le fait que le biais de coin fait avec l'axe de la broche un angle de 8° à 20°.

18. Dispositif selon l'une des revendications 1 à 17, caractérisé par le fait que le biais de montée fait avec l'axe de la broche un angle de 40° à 70°.

19. Dispositif selon l'une des revendications 1 à 18, caractérisé par au moins un trou transversal (90, 92) débouchant à travers une des joues de guidage (74) dans la rainure transversale (52).

20. Dispositif selon la revendication 19, caractérisé par le fait que dans chaque joue de guidage (74) est fait un trou transversal (90, 92) débouchant dans la rainure transversale (52).

21. Dispositif selon la revendication 20, caractérisé par le fait que les trous transversaux (90, 92) débouchent dans la rainure transversale (52) chacun dans la zone d'un des flancs transversaux (52'', 52').

22. Dispositif selon l'une des revendications 19 à 21, caractérisé par un trou borgne (90'', 92'') aligné avec le trou transversal (90, 92) et ouvert vers la rainure transversale (52) fait dans la joue de guidage (74) opposée.

23. Dispositif selon l'une des revendications 19 à 22, caractérisé par le fait qu'au moins un des flancs transversaux (52'') est limité par une partie (90') de la surface de trou transersal (90) s'étendant dans la zone du biais de coin (30).

24. Dispositif selon l'une des revendications 1 à 23, caractérisé par le fait que le biais de montée (52') est constitué d'un chanfrein fait dans un flanc transversal (93) sensiblement parallèle à l'axe de la cheville de blocage.

25. Dispositif selon l'une des revendications 1 à 24, caractérisé par le fait que le fond (94) de la rainure transversale est sensiblement perpendiculaire à l'axe de la cheville de blocage.

26. Dispositif selon l'une des revendications 1 à 25, caractérisé par un trou de centrage (96) de même axe que la cheville de blocage fait dans le fond (94) de la rainure transversale.

27. Dispositif selon l'une des revendications 1 à 26, caractérisé par le fait que le biais de montée (52') est entamé par le trou de centrage (96).
